Europäisches Patentamt

European Patent Office

Office européen des brevets

(19)

(11) **EP 1 308 758 A2**

(12) **EUROPEAN PATENT APPLICATION**

(43) Date of publication:
07.05.2003 Bulletin 2003/19

(51) Int Cl.⁷: **G02B 6/28**

(21) Application number: 02292701.6

(22) Date of filing: 30.10.2002

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: **01.11.2001 US 985033**

(71) Applicant: **Alcatel Optronics Canada Ltd.
Gatineau, Québec J8T 8J7 (CA)**

(72) Inventor: **Gilbert, Sébastien
Aylmer, Québec J9H 6E8 (CA)**

(74) Representative: **Feray, Valérie et al
Feray Lenne Conseil
44/52, Rue de la Justice
75020 Paris (FR)**

(54) **Control of the fabrication process of a fiber optics Mach-Zehnder interferometer using fast phase modulation**

(57)      A method and apparatus for fabricating Mach-Zehnder interferometers. The first coupler in the interferometer is fabricated using known techniques and the coupling coefficient for the first coupler is measured. By plotting the envelope of the global coupling coefficient function, a function that is dependent solely on the coupling coefficients of the first and the second coupler, the coupling coefficient of the second coupler can be directly obtained.

FIG. 1

EP 1 308 758 A2

## Description

The present invention relates to optical components and more specifically to methods and apparatus for the fabrication of Mach-Zehnder interferometers.

The recent increase in both interest in and dependence on optical networks has led to an increase in the demand for high quality optical components. One of the cornerstones of optical networking is the add/drop filter. This component allows channels or wavelengths to be added or dropped at any point in an optical network.

One type of add/drop filter is the Mach-Zehnder interferometer type. The Mach-Zehnder interferometer add/drop filter consists of a first and second coupler and two optical fiber arms coupled at each end by the couplers. Both arms have identical Bragg gratings imprinted on them and the Bragg gratings determine which of the wavelengths are to be dropped from, or added, to a signal carried by optical fiber systems attached to each end of the filter. While this type of add/drop filter provides good performance and high efficiency, it is difficult to manufacture.

In manufacturing an acceptable Mach-Zehnder interferometer it is desirable that, the coupling coefficients of the couplers be related. If one coupler has a coupling coefficient of 50%, then the other coupler should have a coupling coefficient of 50%. Ideally, the coupling coefficients of the two couplers should, when added, result in a combined coefficient of 100%. To manufacture such a filter, the first coupler is manufactured and its coupling coefficient is measured as a specific percentage value of x%. The coupling coefficient of the second coupler can then be made to reach a predetermined value of 50% or another predetermined value that complements the value for the coupling coefficient of the first coupler. During the manufacturing of the second coupler, the coupling coefficient of the second coupler is determined by its elongation. Currently, there is no direct way of measuring the coupling coefficient of the second coupler as it is being elongated because of a random phase difference between the optical paths of the arms of the interferometer. Current techniques for creating the second coupler involve elongating the second coupler until its elongation is substantially similar to that of the first coupler, and then testing the extinction ratio of the whole device to indirectly obtain the coupling ratio value. This process leads to low yields because the coupling ratio of the second coupler is not known during fabrication.

Another drawback is the inexactness of the process. During elongation of the second coupler, the phase difference between the signals in the arms can be random and the operator then cannot be certain when to stop the ebngation in order to have a second coupler whose coupling coefficient is at a desired value. As noted above, if the coupling coefficient of the first coupler is 50%, this desired value is 50%. The operator tries to keep the environment as stable as possible to exclude any factors that could induce a large phase difference between the signals travelling in the two arms.

If there is a phase difference problem, the operator can only stop the elongation when the second coupler reaches the same length at which the elongation of the first coupler stopped. The length of the first coupler is insufficient information on which to base the fabrication of the second coupler because current fabrication techniques are not sufficiently controlled and because the length of the first coupler varies from device to device. Since the operator does not have a direct measurement of the coupling coefficient of the second coupler, he will not necessarily stop the elongation when the second coupler achieves the necessary coupling coefficient. This, unfortunately, leads to a low yield in manufacturing acceptable Mach-Zehnder interferometer.

The present invention seeks to provide a better method of controlling a coupling coefficient in fabricating a Mach-Zehnder interferometer having a first coupler and a second coupler and a pair of arms coupled by the couplers, said coupling coefficient to control being the coupling coefficient of the second coupler.

More precisely, the present invention provides a method of controlling a coupling coefficient in fabricating a Mach-Zehnder interferometer having a first coupler and a second coupler and a pair of arms coupled by the couplers, said coupling coefficient to control being the coupling coefficient of the second coupler, the first coupler having a known coefficient, the method comprising:

a) modulating a phase difference between optical signals passing through the arms while the second coupler is being elongated;
b) determining an envelope of an overall coupling ratio based on a value of the phase difference;
c) calculating the coupling coefficient of the second coupler from the envelope and the known coupling coefficient of the first coupler; and
d) elongating the second coupler until the coupling coefficient of the second coupler reaches a desired value,

wherein the overall coefficient function is dependent on the coupling coefficients of the first and second couplers, and the envelope defines boundaries of the overall coefficient ratio.

Thus, the first coupler of the interferometer is fabricated using known techniques and the coupling coefficient for the first coupler is measured. By plotting the envelope of an overall coupling ratio function for the Mach-Zehnder interferometer, a function that is dependent solely on the coupling coefficients of the first and the second coupler, the coupling coefficient of the second coupler can be directly obtained. This plotting is done in real-time while the second coupler is being elongated. Once a desired value for the coupling coefficient of the second coupler is reached, the elongation is halted.

Mapping of the overall coupling ratio function can be obtained by heating one of the arms of the interferometer in a modulated fashion as the second coupler is elongated. Essentially, a $CO_2$ laser is used to heat one of the arms of the interferometer and the power of the $CO_2$ laser is modulated while the length of the second coupler is increased and while identical optical signals are passed through both arms. The heating produces a modulated phase difference between the optical signals in the first arm and the second arm of the interferometer. When the phase difference between the optical signals is zero, the value of the overall coupling coefficient function is at a maximum and these points define the upper envelope of the overall coupling ratio function.

Conversely, when the phase difference between the optical signals reaches **B**, the overall coupling ratio function reaches a minimum and these points define the lower envelope of the overall coupling coefficient function. By plotting the value of the overall coupling ratio against the elongated length of the second coupler, the upper and lower envelopes become readily apparent. The envelope of the global coupling ratio function is dependent solely on the coupling coefficients of the first and second couplers. Since the coupling coefficient of the first coupler is known, the real time value of the second coupling coefficient can be monitored. When the desired value for the second coupling coefficient is reached, the lengthening of the second coupler is stopped.

In a second embodiment the present invention provides a system for determining coupling coefficients while fabricating a Mach-Zehnder interferometer having a first coupler having a known coupling coefficient and a second coupler with a unknown coupling coefficient and a pair of arms coupled by the couplers, the system comprising:

- data processing means for processing data and for calculating the unknown coupling coefficients of the second coupler from an overall coupling ratio and the known coupling coefficient of the first coupler;
- heating means for heating one of the pair of arms;
- control means for modulating a power of the heating means such that heat delivered to one of the arms is also modulated;
- elongating means for elongating the second coupler;
- signal input means for inputting an optical signal into the first coupler such that the optical signal propagates into the pair of arms; and
- measurement means for measuring the overall coupling ratio for the interferometer, the measurement means providing data to the data processing means, the overall coupling ratio being dependent on coupling coefficients of said first and second couplers and the phase difference between the arms of the interferometer.

In a third embodiment the present invention provides a system for determining coupling coefficients while fabricating a Mach-Zehnder interferometer having at least two couplers, a first coupler of the at least two couplers having a known coupling coefficient, the interferometer further having a pair of arms coupled by the coupler, the system comprising:

- data processing means for processing data and for calculating the coupling coefficients based on an overall coupling ratio and any known coupling coefficients;
- heating means for heating one of the pair of arms;
- control means for modulating a power of the heating means such that heat delivered to one of the arms is also modulated;
- elongating means for elongating a coupler from at least two couplers other than the first coupler;
- optical signal input means for inputting an optical signal into the first coupler such that the signal propagates into the pair of arms; and
- measurement means for measuring the overall coupling ratio for the interferometer, the measurement means providing data to the data processing means.

In a fourth embodiment the present invention provides a method of fabricating a Mach-Zehnder interferometer having a first coupler with a known coupling coefficient, a pair of arms between the first coupler and a second coupler, the method comprising:

a) modulating a phase difference between optical signals passing through the arms while the second coupler is being elongated;
b) measuring an overall coupling ratio for the interferometer, the overall coupling ratio being dependent on coupling coefficients of the first and second couplers and the phase difference;
c) calculating a coupling coefficient of the second coupler using the known coupling coefficient of the first coupler and the overall coupling ratio;
d) elongating the second coupler if the coupling coefficient of the second coupler is not substantially equal to a desired value; and
e) repeating steps a) - d) until the coupling coefficient of the second coupler substantially equals said desired value.

Other characteristics and advantages of the invention will appear on reading the following description of embodiments of the invention, given by way of example and with reference to the accompanying drawings, in which:

Figure 1 shows a schematic diagram of a system for measuring the coupling coefficient of the second coupler as it is being elongated;

Figure 2 shows a graph of the coupling curve without fast phase modulation and illustrating the upper and lower bounds of the coupling ratio;

Figure 3 shows a graph of the coupling curve with fast phase modulation illustrating how the upper and lower boundaries of the coupling ratio become more apparent;

Figure 4 shows a graph of the coupling curve as in Figure 3 but with a different coupling coefficient for the first coupler; and

Figure 5 shows a diagram of a Mach-Zehnder interferometer with more than two couplers.

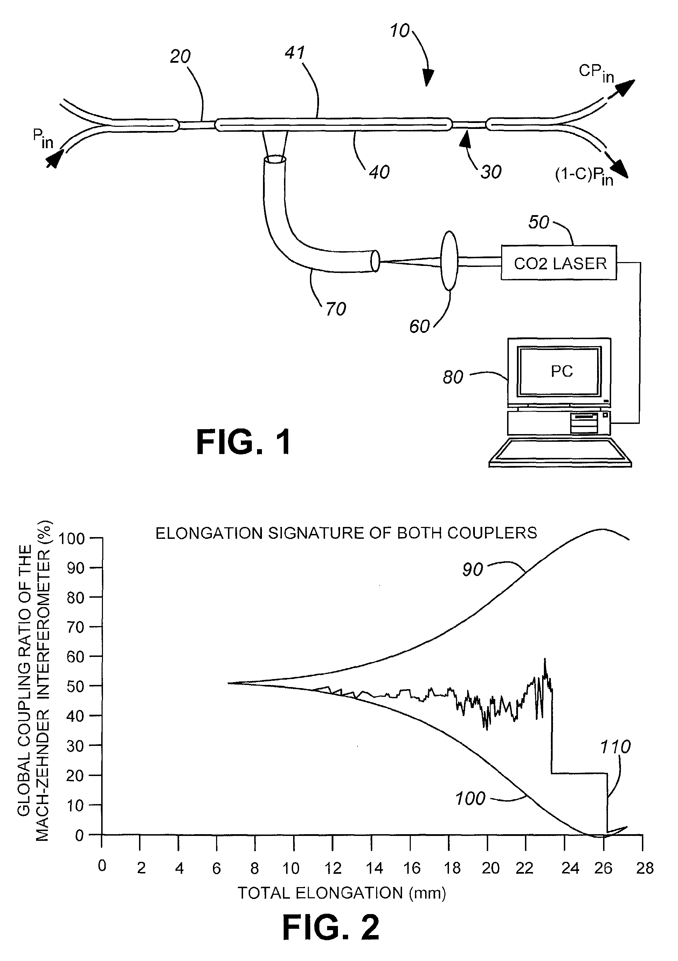

Referring first to Figure 1, a system for determining the coupling coefficient of the second coupler in a Mach-Zehnder interferometer type add/drop filter 10 has a first coupler 20 and a second coupler 30 at the end of interferometer arms 40, 41. In fabrication, as the second coupler is being elongated, a $CO_2$ laser 50 is directed at the arm 40 through a ZnSe lens 60 and a hollow silica waveguide 70. The power of the laser 50 is modulated by a controller 80 such as a personal computer. It should be noted that the laser 50 in this case is used as a heat source and not as a signal source.

By modulating the power of the $CO_2$ laser 50 in a fast manner, the heating introduces a modulation of the phase difference between the signals in the arms 40, and 41. The overall coupling ratio between the first coupler 20 and second coupler 30 is a function of the coupling coefficients of the first coupler 20 and the second coupler 30 and the phase difference between the signals in the arms 40, 41. This overall coupling ratio can be plotted using the modulated phase difference introduced by the heating of the arm 40.

In Figure 2, which illustrates the overall coupling ratio without fast phase modulation of the laser power, the envelope of the coupling ratio is not apparent. In Figure 2 the upper bound 90 and the lower bound 100 of the coupling ratio is not readily apparent given the coupling curve 110.

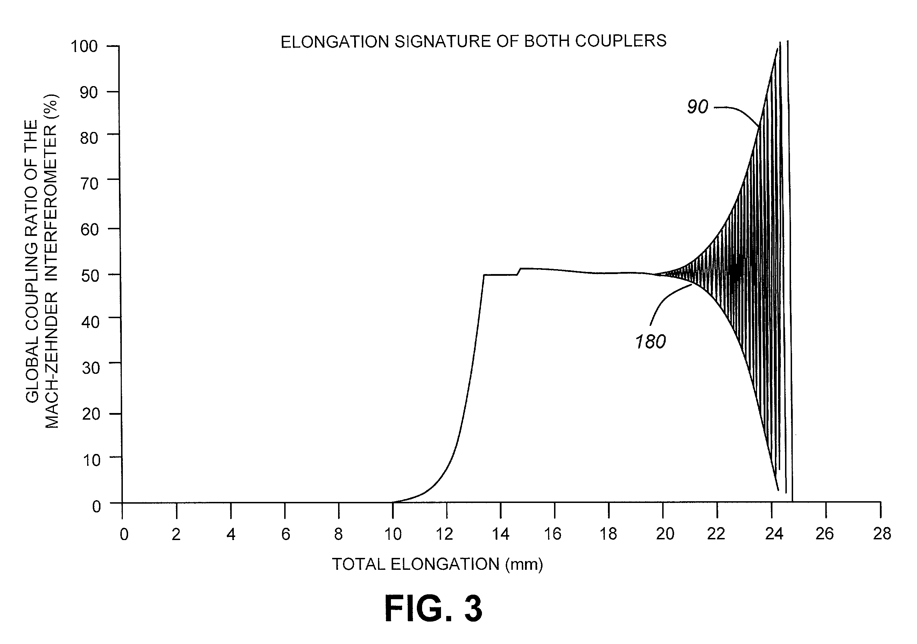

However, referring to Figure 3, with the fast phase modulation it can be seen that the upper bound 90 and the lower bound 100 of the envelope are readily apparent. The data points in Figure 3 are obtained using fast phase modulation of the laser power and the numerous data points allow the upper 90 and lower 100 bound of the envelope to be easily seen. This is because the overall coupling ratio is at a maximum when the phase difference between the signals in the arms 40 and 41 is zero and is at a minimum when the phase difference equals **B**. Thus, when fabricating the second coupler, the operator needs to determine when the coupling coefficient at the second coupler reaches a desired value or when the overall coupling ratio reaches its own desired value. If a desired overall coupling ratio is the determining factor to fabrication, the elongation of the second coupler is halted when the overall coupling ratio reaches the desired value. As can be seen from Figure 3, this overall coupling ratio can range from 0-100%.

To further explain Figure 3, it should be noted that from the middle of the Figure, at a value of 50% for the overall coupling ratio, only the first coupler is present with a coupling coefficient of 50%. At this point, the value for the second coupler coupling coefficient is zero. As the second coupler is elongated (beginning at a total elongation of 20mm), the value for the overall coupling ratio begins to oscillate. When a desired value for the overall coupling ratio reaches a desired value such as 100%, the elongation of the second coupler is halted.

If, on the other hand, the second coupler coupling coefficient is the determining factor for fabrication, a function for the overall coupling ratio based on the coupling coefficients of the first and second couplers can be used to find the coupling coefficient for the second coupler. Since the value for the overall coupling ratio is being plotted in Figure 3, the value for this variable is known. In plotting the overall coupling ratio, the value for the first coupler coupling coefficient is fixed and known. Based on these two known values, the real time value for the second coupler coupling coefficient can be calculated. The equation that can be used if the overall ratio value is on the upper curve (phase difference = 0) is overall ratio value= $C_1(1-C_2)+C_2(1-C_1)+2\sqrt{C_1 C_2(1-C_1)(1-C_2)}$ where $C_1$ = coupling coefficient value for the first coupler and $C_2$ = coupling coefficient value for the second coupler.

As noted above, since the overall ratio value is known along with the first coupler coupling coefficient, the value for the second coupler coupling coefficient can be calculated. If the overall ratio value is the lower curve (phase difference = **B**) then the overall ratio value = $C_1(1-C_2)+C_2(1-C_1)-2\sqrt{C_1 C_2(1-C_1)(1-C_2)}$ equation to be used is:

where $C_1$ = coupling coefficient value for the first coupler and $C_2$ = coupling coefficient value for the second coupler. Again, as above, the coupling coefficient for the second coupler can be computed as the overall coupling ratio and the first coupler coupling coefficient are known. The global coupling ratio curve gives both sets of points: the zero-phase difference curve (upper envelope) and the **B** phase difference curve (lower envelope). The value of $C_2$ can be calculated with equal precision from both sets of points.

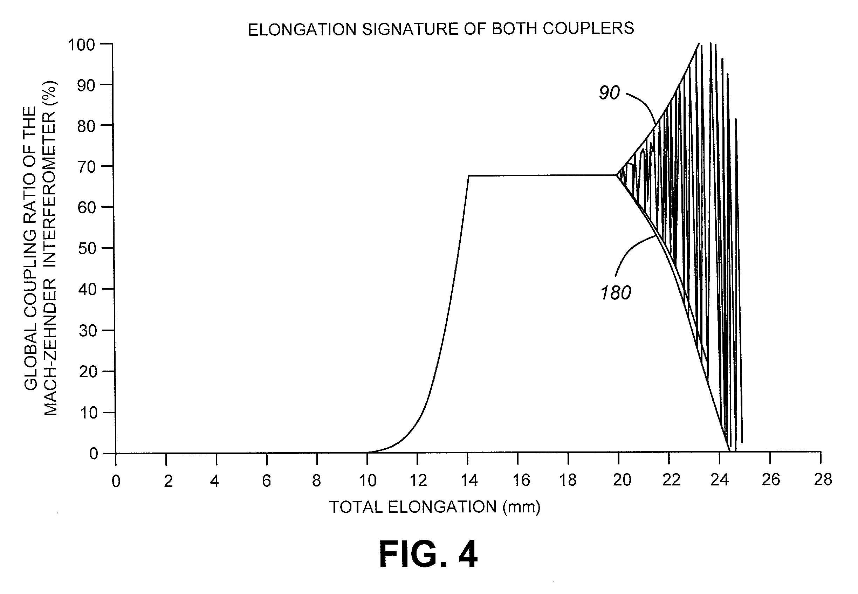

It should be noted that the optimum coupling coefficient for both first and second couplers is 50% for a combined or global coupling ratio of 100%. However, if the coupling coefficient of the first coupler is not the optimum 50%, this can be compensated for by having a second coupler coupling coefficient which results in a 100% global coupling ratio. Thus, if a first coupler coupling coefficient equals 58%, a desirable second coupler coupling coefficient would be 42%. This situation is illustrated in Figure 4 where the coupling coefficient for the first coupler is 67%. As can be seen from Figure 4, the increase in the coupling coefficient for the second coupler begins when the total elongation of the two couplers reach 20mm. The elongation on the graph (x-axis) refers to the total combined elongation of the two couplers. In Figure 4, the elongation of the first coupler is stopped at 14mm.

For a more accurate determination of the coupling coefficient of the second coupler, the function for the upper bound 90 of the envelope of the coupling ratio, as can be seen in Figures 2 and 3, but more readily apparent in Figure 3, can be determined by plotting the points obtained where the coupling is at maximum. This occurs when the phase difference between the optical signals in the arms 40, 41 is zero.

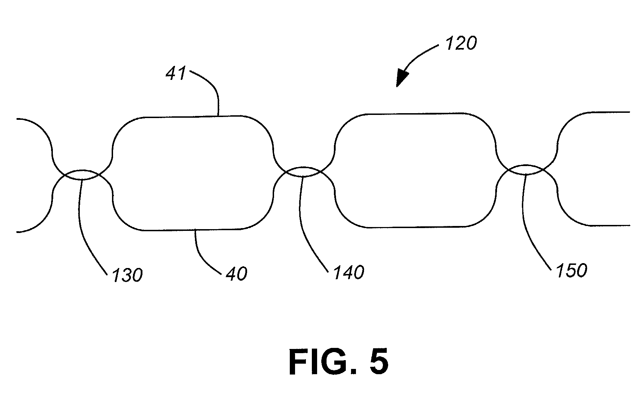

It should be noted that while the above discussion centers on devices with two couplers, the principles explained above are also applicable for devices with multiple couplers. Such devices could have different coupling coefficients for different couplers Figure 5 illustrates one such device. The device 120 in Figure 5 has 3 couplers: an initial coupler 130, a secondary coupler 140, and a tertiary coupler 150 between the arms 40, 41. The coupling coefficients for these couplers need not be balanced in that they need not be equal to one another. Thus, the initial coupler 130 may have a coupling coefficient of 50%, the secondary coupler 140 may have a coupling coefficient of 21% and, finally, the tertiary coupler 150 may have a coupling coefficient of 62%.

The coupling coefficient of the couplers can be tracked in turn to control the overall coupling ratio for the device 120. Assuming the first coupler is manufactured properly and that that coupling coefficient is determined, this data can be used with the technique outlined above to track and control the coupling coefficient for the secondary coupler 140. Once the coupling coefficients for the initial 130 and secondary 140 couplers is determined the coupling coefficient for the tertiary coupler 150 can also be found. Assuming a desired overall coupling ratio is already chosen, by graphing the overall coupling ratio against the total elongation of the couplers in much the same way as detailed in Figures 3 and 4, the elongation for the tertiary coupler 150 can be halted when the desired overall coupling ratio is achieved.

The data in Figure 3 was obtained using a 10W $CO_2$ laser modulated at 20% of its maximum power at a frequency of 0.5 Hz. The $CO_2$ laser beam was focussed using a 5.08 mm focal length ZnSe lens and injected into a 2 metre long, 1 mm diameter hollow silica waveguide. Since the heating is localized to the arm 40, the maximum estimated temperature difference between two arms 40, 41 fibres is around 200°C over 1 mm.

One important aspect of the above technique relates to the sampling rate of the equipment tracking the overall coupling ratio. The rate of modulation that the laser power supply undergoes can be quite high and this will affect the required data acquisition rate used for plotting the graph. The data acquisition rate should be higher than the modulation rate. If the data acquisition rate is lower than the modulation rate, it is possible that a point on the upper curve 90 or a point on the lower curve 100 may be missed. A data acquisition rate much higher than the modulation rate will ensure that all points on both the upper and the lower curves can be found and plotted. It should be noted that the modulation rate of the laser should not be so fast that the optical fiber does not have sufficient time to follow the modulation rate. The small thermal mass of the fiber allows for a maximum modulation rate of about 1Hz for the example used when obtaining the data of Figure 3.

## Claims

1. Method of controlling a coupling coefficient in fabricating a Mach-Zehnder interferometer having a first coupler and a second coupler and a pair of arms coupled by the couplers, said coupling coefficient to control being the coupling coefficient of the second coupler, the first coupler having a known coefficient, the method comprising:

   a) modulating a phase difference between optical signals passing through the arms while the second coupler is being elongated;
   b) determining an envelope of an overall coupling ratio based on a value of the phase difference;
   c) calculating the coupling coefficient of the second coupler from the envelope and the known coupling coefficient of the first coupler; and
   d) dongating the second coupler until the coupling coefficient of the second coupler reaches a desired value,

   wherein the overall coefficient function is dependent on the coupling coefficients of the first and second couplers, and the envelope defines boundaries of the overall coefficient ratio.

2. Method according to claim 1 wherein step a) is accomplished by heating one of the arms according to a modulating frequency.

3. Method according to claim 2 wherein the heating is accomplished by directing a laser beam on one of the arms to heat the one of the arms, the beam being modulated to the modulating frequency.

4. Method according to any one of claims 1 to 3 wherein an upper envelope for step b) is found by determining at which points the phase difference is zero and plotting the points.

**5.** Method according to any one of claims 1 to 4 wherein a lower envelope for step b) is found by determining at which point the phase difference is substantially equal to **B** and plotting the points.

**6.** System for determining coupling coefficients while fabricating a Mach-Zehnder interferometer having a first coupler having a known coupling coefficient and a second coupler with a unknown coupling coefficient and a pair of arms coupled by the couplers, the system comprising:

- data processing means for processing data and for calculating the unknown coupling coefficients of the second coupler from an overall coupling ratio and the known coupling coefficient of the first coupler;
- heating means for heating one of the pair of arms;
- control means for modulating a power of the heating means such that heat delivered to one of the arms is also modulated;
- elongating means for elongating the second coupler;
- signal input means for inputting an optical signal into the first coupler such that the optical signal propagates into the pair of arms; and
- measurement means for measuring the overall coupling ratio for the interferometer, the measurement means providing data to the data processing means, the overall coupling ratio being dependent on coupling coefficients of said first and second couplers.

**7.** System according to claim 6 wherein the heating means includes a $CO_2$ laser and a guiding means for guiding a beam from the $CO_2$ laser on said one of said pair of arms.

**8.** System according to claim 7 wherein the guiding means includes a Zn Se lens and a silica waveguide.

**9.** System for determining coupling coefficients while fabricating a Mach-Zehnder interferometer having at least two couplers, a first coupler of the at least two couplers having a known coupling coefficient, the interferometer further having a pair of arms coupled by the coupler, the system comprising:

- data processing means for processing data and for calculating the coupling coefficients based on an overall coupling ratio and any known coupling coefficients;
- heating means for heating one of the pair of arms;
- control means for modulating a power of the heating means such that heat delivered to one of the arms is also modulated;
- elongating means for elongating a coupler from the at least two couplers other than the first coupler;
- optical signal input means for inputting an optical signal into the first coupler such that the signal propagates into the pair of arms; and
- measurement means for measuring the overall coupling ratio for the interferometer, the measurement means providing data to the data processing means.

**10.** System according to claim 9 wherein the heating means includes a $CO_2$ laser and guiding means for guiding a beam from the $CO_2$ laser on the one of the pair of arms.

**11.** System according to claim 10 wherein the guiding means includes a Zn Se lens and a silica waveguide.

**12.** Method of fabricating a Mach-Zehnder interferometer having a first coupler with a known coupling coefficient, a pair of arms between the first coupler and a second coupler, the method comprising:

a) modulating a phase difference between optical signals passing through the arms while the second coupler is being elongated;
b) measuring an envelope of an overall coupling ratio for the interferometer, the envelope of the overall coupling ratio being dependent on coupling coefficients of the first and second couplers;
c) calculating a coupling coefficient of the second coupler using the known coupling coefficient of the first coupler and the envelope of the overall coupling ratio;
d) elongating the second coupler if the coupling coefficient of the second coupler is not substantially equal to a desired value; and
e) repeating steps a) - d) until the coupling coefficient of the second coupler substantially equals said desired value.

**13.** Method according to claim 12 wherein step a) is accomplished by heating one of the arms according to a modulating frequency.

**14.** Method according to claim 13 wherein the heating is accomplished by directing a laser beam on one of the arms to heat said one of the arms, the beam being modulated to the modulating frequency.

**15.** Method according to claim 14 wherein the laser beam is produced by a $CO_2$ laser.

**16.** Method according to any one of claims 14 or 15 wherein the beam is directed on one of the arms by a ZnSe lens and a silica waveguide.

**FIG. 1**

ELONGATION SIGNATURE OF BOTH COUPLERS

**FIG. 2**

ELONGATION SIGNATURE OF BOTH COUPLERS

**FIG. 3**

EP 1 308 758 A2

ELONGATION SIGNATURE OF BOTH COUPLERS

FIG. 4

**FIG. 5**